# EUROPÄISCHE PATENTSCHRIFT

(11) **EP 0 988 164 B1**
(45) Veröffentlichungstag und Bekanntmachung des Hinweises auf die Patenterteilung: **17.10.2001**
(21) Anmeldenummer: 98937439.2
(22) Anmeldetag: 03.06.1998
(51) Int. Cl.: B60H 1/22, F23K 5/04

(54) **HEIZGERÄT**
HEATING DEVICE
APPAREIL DE CHAUFFAGE

(30) Priorität: 11.06.1997 DE 19724502
(43) Veröffentlichungstag der Anmeldung: 29.03.2000
(73) Patentinhaber: WEBASTO THERMOSYSTEME GmbH, D-82131 Stockdorf (DE)
(72) Erfinder: WIDEMANN, Fritz, D-81241 München (DE)
(74) Vertreter: Wiese, Gerhard
(86) Internationale Anmeldenummer: EP9803311
(87) Internationale Veröffentlichungsnummer: WO9856607

(56) Entgegenhaltungen:
- EP-A- 0 233 349
- DE-A- 2 160 086
- DE-A- 3 025 283
- DE-A- 4 415 513
- DE-A- 19 526 003
- DE-A- 19 619 861

## Beschreibung

Die Erfindung betrifft ein Heizgerät, insbesondere für ein Kraftfahrzeug, mit einem Brenner, dem aus einem Tank über eine Brennstoffleitung und einen Druckspeicher mittels einer Pumpe, insbesondere einer Kolbenpumpe Brennstoff zugeführt wird, und mit einer elektronisch steuerbaren Ventileinrichtung, die in die Brennstoffleitung eingesetzt und durch eine Steuereinrichtung steuerbar ist.

Ein gattungsgemäβes Heizgerät ist aus der nachveröffentlichten DE 196 19 861 A1 bekannt. Bei diesen liegt der Druckspeicher im Strömungspfad zwischen Pumpe und Ventileinrichtung, so daß die Ventileinrichtung das Beladen des Druckspeichers nicht zu steuern vermag.

Zur Brennstoffversorgung von Heizgeräten werden hauptsächlich mechanisch oder elektrisch angetriebene Kolbenpumpen verwendet. Eine Ausnahme bildet der Hochdruckbrenner. Beim Einsatz im Zuheizbetrieb haben die bekannten Kolbenpumpen den Nachteil, daß sie mit dem im Verlauf herrschenden Drücken von etwa 3 bar oder mehr nicht sicher funktionieren. Bei der Dosierung des Brennstoffs über Düsen gemäß einem bekannten Vorschlag, müssen große, unsichere und teure Druckminderer eingesetzt werden. Durch die volumetrische Förderung gelangt Luft in den Brennstoff und ruft im Brennstoffsystem Störungen hervor.

Um letztgenannten Nachteil zu überwinden, ist für das aus der DE 195 26 003 A1 bekannte Heizgerät vorgesehen, in der Brennstoffleitung zum Brenner ein Magnetventil anzuordnen. Dieses Magnetventil bildet eine Drosselstelle in der Brennstoffleitung, die dem strömenden Brennstoff einen erheblichen Widerstand entgegensetzt, welcher bei zunehmender Durchflußmenge überproportional ansteigt, während diese Drosselstelle Luft bzw. Gas oder Dampf nur sehr geringen Widerstand entgegensetzt. In Zusammenwirkung mit einer dtuckgesteuerten Brennstoffpumpe wird auf diese Weise erreicht, daß Störungen im Brennstoffsystem aufgrund von Gasblasen und dergleichen verhindert werden. Das Magnetventil wird entsprechend der benötigten Brennerleistung mit einer definierten Frequenz angesteuert, die der Hubfrequenz der Pumpe entspricht. Durch diese Maßnahme wird jedoch nicht gewährleistet, daß die Pumpe bei großen Vorlaufdrücken sicher arbeitet. Ein ähnliches Heizgerät ist aus der DE-A1-30 25 283 bekannt.

Aus der DE-A1-21 60 086 ist es bekannt, in eine Leitung zwischen einem Öltank und einem Brenner auf der Druckseite einer Pumpe ein Ventil einzusetzen, das an eine Kammer angeschlossen ist, die so ausgelegt ist, daß in der Brennerleitung zu einem gewissen Zeitpunkt einer geringerer Druck erzeugt wird, um eine bestimmte überschüssige Ölmenge von der Brennerleitungsmündung zurückzusaugen.

Der vorliegenden Erfindung liegt die Aufgabe zugrunde, ein Heizgerät der im Oberbegriff des Anspruchs 1 genannten Art zu schaffen, das unabhängig von dem von der Pumpe bereitgestellten Druck eine sichere Förderung von Brennstoff zum Brenner gewährleistet.

Gelöst wird diese Aufgabe durch die Merkmale des Anspruchs 1. Vorteilhafte Weiterbildungen der Erfindung sind in den Unteransprüchen angeführt.

Die Erfindung sieht eine Kombination der Ventileinrichtung mit einem Druckspeicher vor, der als Puffer und Vorratsspeicher für den von einer fahrzeugeigenen Vorförderpumpe oder für einen Standheizbetrieb einer zusätzlichen Vorförderpumpe beliebiger Bauart gelieferten Brennstoff dient und den Brennstoff mit einem durch die Konstruktion des Druckspeichers festgelegten Druck, der für den nachgeschalteten Brenner verträglich ist, an diesen fördert. Das heißt, die bisher mittels eines Magnetventils übliche intermittierende Zuführung von Brennstoff von der Kolbenpumpe zum Brenner ist erfindungsgemäß ersetzt durch eine Zwischenspeicherung des Brennstoff im Druckspeicher und eine Brennstoffabgabe an den Brenner ausschließlich aus diesem Zwischenspeicher. Dadurch ist gewährleistet, daß die Förderung von Brennstoff zum Brenner völlig unabhängig vom Förderdruck stromaufwärts von der Ventileinrichtung ist, so daß weder Druckschwankungen von der Pumpe, noch ein zu hoher durch diese Pumpe erzeugter Druck sich ungünstig auf die Funktion des Brenners auswirken.

Um ein Durchgreifen der Pumpe zum Brenner mit Sicherheit zu vermeiden, ist vorteilhafterweise vorgesehen, daß gesteuert durch die Steuereinheit jeweils nur einer der beiden Pfade der Ventileinrichtung offen ist, nämlich entweder der erste Pfad von der Pumpe in den Druckspeicher oder der zweite Pfad vom Druckspeicher zum Brenner.

Besonders bevorzugt ist die Pfadsteuerung so getroffen, daß der erste Pfad bereits geschlossen ist, bevor der zweite Pfad geöffnet wird. Anstelle der zuletzt genannten Maßnahme können die Umschaltzeiten der Ventileinrichtung durch entsprechende Auslegung der Magnet- und Federkräfte derselben so kurz gehalten werden, daß ein Durchgriff der Pumpe zum Brenner verhindert wird.

Die Ventileinrichtung kann grundsätzlich in unterschiedlicher Weise ausgelegt sein. Eine bevorzugte Ausführungsform der Ventileinrichtung ist ein Drei-/Zweiwege-Magnetventil bzw. ein Zweiwege-Schieberventil zur Steuerung der beiden stromaufwärtigen bzw. stromabwärtigen Strömungspfade. Alternativ kann dieses Zweiwege-Ventil auch durch ein Paar von einzelnen Ventilen ersetzt sein. Grundsätzlich kommt auch der Einsatz eines Dreiwegeventils in Betracht, das entsprechend so gesteuert ist, daß ein Durchgriff von der Pumpe zum Brenner verhindert wird.

Um eine möglichst gleichmäßige Fördermenge über einen weiten Druckbereich zu erzielen, ist vorteilhafterweise vorgesehen, daß der Druckspeicher eine weiche Federkennlinie mit harter Begrenzung aufweist, was beispielsweise dadurch erzielt werden kann, daß im Druckspeicher zwei Metallmembranen als Speicherelement zum Einsatz gelangen, die bei Erreichen des Maximaldrucks in gegenseitige Anlage gelangen. Es können aber auch beliebige andere Druckspeicher zur Anwendung kommen, wie z.B. durch Dichtlippen oder Rollmembranen abgedichtete Kolben.

Gemäß einer weiteren vorteilhaften Weiterbildung der Erfindung ist die Ventileinrichtung so ausgelegt, daß sie im stromlosen Zustand den ersten Strömungspfad von der Pumpe in den Druckspeicher freigibt, während sie den zweiten Strömungspfad von diesem zum Brenner im stromlosen Zustand sperrt.

Nachfolgend wird die Erfindung anhand der Zeichnung beispielhaft näher erläutert; es zeigt:
- Fig. 1: schematisch die Kombination aus Ventileinrichtung und Druckspeicher für ein erfindungsgemäßes Heizgerät,
- Fig. 2: eine Kurvendarstellung der Federkennlinie des Druckspeichers und
- Fig. 3: eine Variante zur Fig. 1.

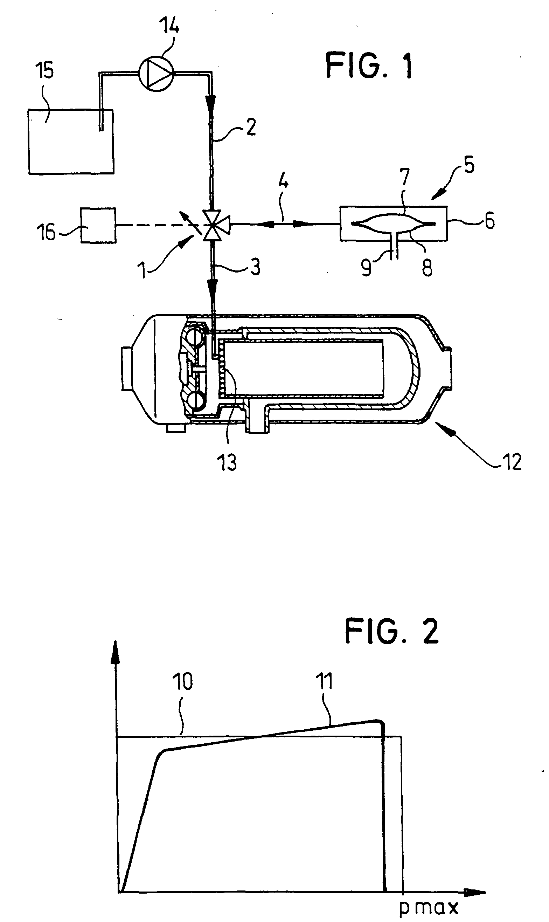

Fig. 1 zeigt den für die Erfindung wesentlichen Teil im Zustrom zu einem Heizgeräts 12 im Bereich der Ventileinrichtung 1, die in einer Brennstoffleitung angeordnet ist, die von einem Brennstofftank 15 zu dem schematisch dargestellten Brenner 13 des Heizgeräts 12 führt. Bezogen auf die Ventileinrichtung 1 besteht die Brennstoffleitung aus einem stromauf-wärtigen Leitungsteil 2 und einem stromabwärtigen Leitungsteil 3. Die Strömungsrichtung des Brennstoffs in der Brennstoffleitung ist in Fig. 1 durch Pfeile dargestellt. Im stromaufwärtigen Leitungsteil 2 ist eine Pumpe 14, insbesondere eine Kolbenpumpe zur Förderung des Brennstoffs in der Leitung 2, 3 angeordnet. In der dargestellten Ausführungsform ist die Ventileinrichtung 1 als Dreiwegeventil gebildet, und ein dritter Weg dieses Ventils über eine Leitung 4 mit einem Druckspeicher 5 verbunden ist. Der Druckspeicher 5 besteht in der dargestellten Ausführungsform aus einem Gehäuse 6, in welches die Leitung 4 mündet und dem Druckspeicherelement, das im Gehäuse 6 angeord-net ist, und aus zwei Metallmembranen 7 und 8 besteht, die randseitig dicht miteinander verbunden sind und einen Hohlraum umschließen, der über ein Rohr 9 oder dergleichen in Verbindung mit der Außenseite des Gehäuses 6 steht. Wie in der Leitung 4 mit einem Doppelpfeil angedeutet, wird diese Leitung 4 alternativ in einer von zwei Richtungen vom Brennstoff durchströmt.

Die Funktionsweise der Kombination aus Ventileinrichtung 1 und Druckspeicher 5 in Fig. 1 ist wie folgt.

Im stromlosen Zustand der Ventileinrichtung 1 ist ein erster Strömungspfad durch diese hindurch offen, der durch den stromaufwärtigen Brennstoffleitungsteil 2 und die Leitung 4 festgelegt ist und eine Förderung des Brennstoffs von der Pumpe in den Druckspeicher 5 vorsieht. Ein zweiter Strömungspfad unter Einschluß des stromabwärtigen Brennstoffleitungsteils 3 ist hingegen im stromlosen Zustand der Ventileinrichtung 1 geschlossen, so daß Brennstoff ausschließlich in den Druckspeicher 5 gefördert wird. Dabei steigt während der Förderung der Druck im Druckspeicher 5 und drückt dadurch zunehmend die beiden Metallmembranen 7 und 8 gegeneinander. Dabei wird der durch die Membran 7 und 8 umschlossene Hohlraum verkleinert und die in diesem Hohlraum enthaltene Luft gelangt über das Rohr 9 ins Freie. Nach Ablauf einer vorgegebenen Zeitperiode, die durch eine Steuereinheit 16 bestimmt ist, welche die Ventileinrichtung 1 steuert, schaltet die Ventileinrichtung 1 so um, daß der erste Strömungspfad geschlossen und der zweite Strömungspfad, umfassend die Leitung 4 und den Brennstoffleitungsteil 3, geöffnet wird. Der unter Druck im Gehäuse 6 des Druckspeichers 5 gespeicherte Brennstoff wird nunmehr über den zweiten Strömungspfad 3, 4 zu dem Brenner 13 gefördert. Bei diesem Vorgang expandiert der durch die Membranen 7 und 8 eingeschlossene Hohlraum, wobei Außenluft über den Stutzen 9 zuströmt. Nach Ende dieses Fördervorgangs über den zweiten Strömungspfad wird die Ventileinrichtung 1 wieder so umgeschaltet, daß eine Förderung über den ersten Strömungspfad erfolgt, usw.

Wesentlich ist, daß der Druckspeicher 5 eine weiche Federkennlinie aufweist, die hart begrenzt ist, nämlich dadurch, daß die zwei Metallmembranen 7 und 8 in Anlage aneinander gelangen, sobald der Druckspeicher 5 maximal mit Brennstoff gefüllt ist. Fig. 2 zeigt die angestrebte optimale Federkennlinie, die mit der Bezugsziffer 10 bezeichnet ist, in einem Diagramm dargestellt ist, auf dessen Ordinate das Volumen im Gehäuse 6 aufgetragen ist, während auf der Abszisse der Brennstoffdruck im Gehäuse 6 aufgetragen ist. Mit der Bezugsziffer 11 ist die tatsächlich erzielbare Federkennlinie bezeichnet, die im Gegensatz zur idealen Federkennlinie mit senkrechter Anstiegsflanke einen steil ansteigenden Teil aufweist, der in einen flach ansteigenden Teil übergeht und dann schlagartig, ähnlich wie die ideale Federkennlinie 10 beim maximalen Druck abfällt, da in diesem Fall die beiden Membranen 7 und 8 in Anlage aneinander gelangen.

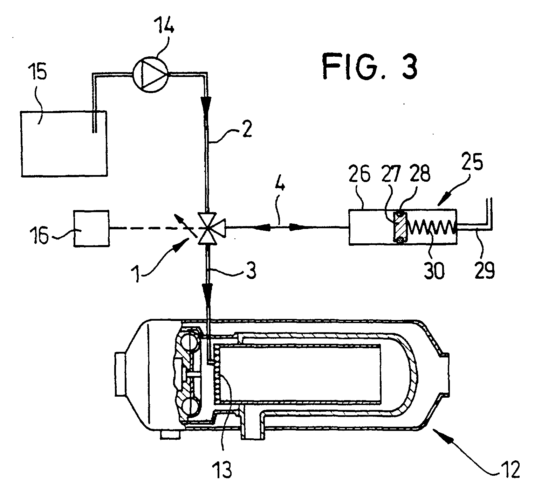

In Fig. 3 wird ein Druckspeicher 25 von einem vorzugsweise zylindrischen Gehäuse 26 umgeben, in welches an einer Stirnseite die Leitung 4 einmündet, und das an der gegenüberliegenden Stirnseite zur Entlüftung mit einem Rohr 29 versehen ist. Im Gehäuse 26 ist ein Kolben 27 axial verschiebbar gelagert, der gegenüber der inneren Mantelfläche des Gehäuses 26 mittels einer Dichtung 28 abgedichtet ist, die beispielsweise in Form einer Lippendichtung mit mehreren hintereinander angeordneten Dichtlippen oder in Form einer Rollmembran-Dichtung ausgeführt sein kann.

Der Kolben 27 ist auf der dem Rohr 29 zugewandten Rückseite mittels einer Feder 30 druckbeaufschlagt. Die Feder 30 kann aus mehreren Federelementen zusammengesetzt sein, um die in Fig. 2 dargestellte weiche Federkennlinie mit hartem Anschlag zu erreichen. Der der Leitung 4 zugewandte Raum an der Vorderseite des Kolbens 27 dient zur Speicherung des flüssigen Brennstoffs.

Die Vorförderpumpe 14 kann sowohl von einer fahrzeugeigenen Pumpe gebildet werden, die Brennstoff zu einem Verbrennungsmotor des Fahrzeugs fördert, als auch bei einer Verwendung des Heizgeräts 12 zum Vorheizen (bei nicht im Betrieb befindlichen Verbrennungsmotor) von einer separaten, dem Heizgerät 12 zugeordneten Pumpe.

### Bezugszeichenliste

- 1: Ventileinrichtung
- 2: stromaufwärtiger Brennstoffleitungsteil
- 3: stromabwärtiger Brennstoffleitungsteil
- 4: Leitung
- 5: Druckspeicher
- 6: Gehäuse
- 7,8: Metallmembranen
- 9: Rohr
- 10: ideale Federkennlinie
- 11: tatsächliche Federkennlinie
- 12: Heizgerät
- 13: Brenner
- 14: Pumpe
- 15: Brennstofftank
- 16: Steuereinheit
- 25: Druckspeicher
- 26: Gehäuse
- 27: Kolben
- 28: Dichtung
- 29: Rohr
- 30: Feder

## Patentansprüche

1. Heizgerät (12), insbesondere für ein Kraftfahrzeug, mit einem Brenner (13), dem aus einem Tank über eine Brennstoffleitung (2, 3) und einem Druckspeicher (5, 25) mittels einer Pumpe (14), insbesondere einer Kolbenpumpe Brennstoff zugeführt wird, und mit einer elektrisch steuerbaren Ventileinrichtung (1), die in die Brennstoffleitung (2, 3) eingesetzt und durch eine Steuereinheit (16) steuerbar ist, **dadurch gekennzeichnet, daß** der Druckspeicher (5, 25) der Ventileinrichtung (1) zugeordnet ist, daß in den Druckspeicher (5, 25) Brennstoff mittels der Pumpe (14) taktweise gesteuert durch die Steuereinheit (16) hinein und aus diesem heraus ohne Einwirkung der Pumpe (14) zum Brenner (13) gefördert wird und daß die Ventileinrichtung (1) zwei Strömungspfade festlegt, einen ersten Pfad von der Pumpe (14) in den Druckspeicher (5, 25) und einen zweiten Pfad vom Druckspeicher (5) zum Brenner (13), wobei gesteuert durch die Steuereinheit (16) stets nur einer dieser Pfade offen steht.

2. Heizgerät nach Anspruch 1, **dadurch gekennzeichnet, daß** die Steuereinheit (16) so ausgelegt ist, daß der erste Pfad bereits geschlossen ist, bevor der zweite Pfad geöffnet wird.

3. Heizgerät nach Anspruch 1 oder 2, **dadurch gekennzeichnet, daß** die Ventileinrichtung (1) wenigstens zwei Magnetventile oder ein Mehrwege-Magnetventil aufweist, um die beiden Pfade zu steuern.

4. Heizgerät nach Anspruch 1 oder 2, **dadurch gekennzeichnet, daß** die Ventileinrichtung (1) wenigstens zwei Schieberventile oder ein Zweiwege-Schieberventil aufweist, um die beiden Pfade festzulegen.

5. Heizgerät nach einem der Ansprüche 1 bis 4, **dadurch gekennzeichnet, daß** der Druckspeicher (5, 25) eine weiche Federkennlinie mit harter Begrenzung aufweist.

6. Heizgerät nach Anspruch 5, **dadurch gekennzeichnet, daß** der Druckspeicher (5) zwei Metallmembranen (8, 9) enthält, die in einem mit der Ventileinrichtung in Verbindung stehenden Gehäuse (6) angeordnet sind und bei Erreichen des Maximaldrucks aneinander anliegen.

7. Heizgerät nach einem der Ansprüche 1 bis 6, **dadurch gekennzeichnet, daß** die Ventileinrichtung (1) im stromlosen Zustand den ersten Strömungspfad freigibt und den zweiten Strömungspfad sperrt.

8. Heizgerät nach einem der Ansprüche 1 bis 5 und 7, **dadurch gekennzeichnet, daß** der Druckspeicher (25) einen mittels einer Feder (30) belasteten Kolben (27) aufweist.

9. Heizgerät nach einem der vorhergehenden Ansprüche, **dadurch gekennzeichnet, daß** die Pumpe (14) von einer unabhängig vom Antrieb des Kraftfahrzeugs betreibbaren Pumpe gebildet wird.

## Claims

1. A heating device (12), particularly for a motor vehicle, with a burner (13) to which fuel is fed from a tank via a fuel line (2, 3) and a pressure storage means (5, 25) by means of a pump (14), particularly a piston pump, and with an electrically controllable valve device (1) which is inserted into the fuel line (2, 3) and is adapted to be controlled by a control unit (16), **characterised in that** the pressure storage means (5, 25) is associated with the valve means (1) and **in that** by means of the pump (14), fuel is fed into the pressure storage means (5, 25) under cyclic control provided by the control unit (16) and is delivered from it to the burner (13) without any action on the part of the pump (14) and **in that** the valve means (1) establishes two flow paths, a first path from the pump (14) into the pressure storage means (5, 25) and a second path from the pressure storage means (5) to the burner (13), whereby only one of these paths is open, controlled by the control unit (16).

2. A heating device according to claim 1, **characterised in that** the control unit (16) is so designed that the first path is already closed before the second path is opened.

3. A heating device according to claim I or 2, **characterised in that** the valve means (1) comprises at least two magnetic valves or one multi-way magnetic valve, in order to control the two paths.

4. A heating device according to claim 1 or 2, **characterised in that** the valve means (1) comprises at least two slide valves or one two-way slide valve in order to establish the two paths.

5. A heating device according to one of claims 1 to 4, **characterised in that** the pressure storage means (5, 25) has a soft spring characteristic with a hard limitation.

6. A heating device according to claim 5, **characterised in that** the pressure storage means (5) contains two metal diaphragms (8, 9) which are disposed in a housing (6) communicating with the valve means and which bear on each other when maximum pressure is reached.

7. A heating device according to one of claims 1 to 6, **characterised in that**, in the currentless state, the valve means (1) opens the first flow path and closes the second flow path.

8. A heating device according to one of claims 1 to 5 and 7, **characterised in that** the pressure storage means (25) comprises a piston (27) biased by means of a spring (30).

9. A heating device according to one of the preceding claims, **characterised in that** the pump (14) is formed by a pump which can be operated independently of the motor vehicle drive.

## Revendications

1. Appareil de chauffage (12), notamment pour un véhicule à moteur, comprenant un brûleur (13) qu'une pompe (14), notamment une pompe à piston, alimente en combustible depuis un réservoir au travers d'une conduite de combustible (2, 3) et d'un réservoir sous pression (5, 25), comprenant également un dispositif à vanne à commande électrique (1) qui est placé dans la conduite de combustible (2, 3) et qui peut être commandé par une unité de commande (16), **caractérisé en ce que** le réservoir sous pression (5, 25) est associé au dispositif à vanne (1), **en ce que** du combustible est acheminé dans le réservoir sous pression (5, 25) au moyen de la pompe (14) qui est commandée en cadence par l'unité de commande (16), puis de là vers le brûleur (13) sans le concours de la pompe (14), et **en ce que** le dispositif à vanne (1) détermine deux voies de circulation, une première voie entre la pompe (14) et le réservoir sous pression (5, 25) et une seconde entre le réservoir sous pression (5) et le brûleur (13), sachant que l'unité de commande (16) veille toujours à ce que seule une de ces voies soit ouverte à la fois.

2. Appareil de chauffage selon la revendication 1, **caractérisé en ce que** l'unité de commande (16) est conçue de telle manière que la première voie est déjà fermée avant que la seconde voie ne s'ouvre.

3. Appareil de chauffage selon la revendication 1 ou 2, **caractérisé en ce que** le dispositif à vanne (1) présente deux électrovannes ou une électrovanne à voies multiples, afin de commander les deux voies.

4. Appareil de chauffage selon la revendication 1 ou 2, **caractérisé en ce que** le dispositif à vanne (1) présente au moins deux vannes à tiroir ou une vanne à tiroir à deux voies, afin de matérialiser les deux voies.

5. Appareil de chauffage selon l'une des revendications 1 à 4, **caractérisé en ce que** le réservoir sous pression (5, 25) présente une courbe caractéristique de ressort souple avec une limite dure.

6. Appareil de chauffage selon la revendication 5, **caractérisé en ce que** le réservoir sous pression (5) contient deux membranes métalliques (8, 9) qui sont logées dans un boîtier (6) relié au dispositif à vanne et qui, lorsque la pression maximale est atteinte, sont appliquées l'une contre l'autre.

7. Appareil de chauffage selon l'une des revendications 1 à 6, **caractérisé en ce qu'**en l'absence de courant électrique, le dispositif à vanne (1) libère la première voie de circulation et ferme la seconde voie de circulation.

8. Appareil de chauffage selon l'une des revendication 1 à 5 et 7, **caractérisé en ce que** le réservoir sous pression (25) présente un piston (27) contraint au moyen d'un ressort (30).

9. Appareil de chauffage selon l'une des revendications précédentes, **caractérisé en ce que** la pompe (14) est formée par une pompe pouvant fonctionner indépendamment du moteur du véhicule à moteur.
